# FASCICULE DE BREVET EUROPEEN

(11) **EP 0 925 996 B1**
(45) Date de publication et mention de la délivrance du brevet: **09.07.2003**
(21) Numéro de dépôt: 98403193.0
(22) Date de dépôt: 17.12.1998
(51) Int. Cl.: B60N 2/00

(54) **Ensemble d'assise pour véhicule comportant un siège amovible monté sur glissières**
Fahrzeugsitzeinheit mit auf Gleitschienen montiertem, abnehmbarem Sitz
Vehicle seat assembly with removable seat mounted on slides

(30) Priorité: 22.12.1997 FR 9716244; 08.07.1998 FR 9808753
(43) Date de publication de la demande: 30.06.1999
(73) Titulaire: FAURECIA SIEGES D'AUTOMOBILE S.A., 92100 Boulogne-Billancourt (FR)
(72) Inventeur: Boisset, Bernard, 91150 Etampes (FR); Lejeune, Jean Michel, 45170 Ascheres le Marche (FR); Schwartz, Laurent, 91150 Etampes (FR)
(74) Mandataire: Burbaud, Eric

(56) Documents cités:
- EP-A- 0 803 396
- DE-U- 9 113 919
- DE-U- 9 314 844
- FR-A- 2 700 735
- US-A- 4 277 043

## Description

La présente invention est relative aux ensembles d'assise pour véhicules, comportant un siège amovible monté sur glissières.

Plus particulièrement, l'invention concerne un ensemble d'assise pour véhicule, comportant :
- au moins une première glissière comprenant un profilé fixe qui est destiné à être solidarisé avec le plancher du véhicule et qui s'étend dans une direction dite longitudinale,
- et un siège qui est supporté par des pieds dont au moins un est monté de façon amovible sur la glissière pour permettre de désolidariser le siège de la glissière, ce pied comportant un verrou d'accrochage qui est déplaçable par des moyens de commande entre, d'une part, une position verrouillée où ledit verrou d'accrochage coopère avec la glissière pour solidariser le pied du siège avec ladite glissière, et d'autre part, une position effacée où le pied peut se séparer de la glissière.

Le document FR-A-2 700 735 décrit un exemple d'un tel ensemble d'assise, dans lequel la glissière comporte un profilé mobile qui est monté coulissant le long du profilé fixe, ce profilé mobile pouvant être immobilisé par un verrou de glissière qui est porté par ladite glissière et qui est commandé par un dispositif de commande de glissière monté sur le siège.

Les dispositions proposées dans le document susmentionné impliquent que le dispositif de commande de glissière se trouve parfaitement en correspondance avec le verrou de glissière lorsque le siège est remonté sur ses glissière après avoir été enlevé. Cet impératif entraîne des contraintes importantes sur la conception du siège, notamment si l'on souhaite pouvoir monter le siège orienté indistinctement vers l'avant ou vers l'arrière du véhicule.

De plus, l'ensemble d'assise décrit dans le document susmentionné présente également l'inconvénient que les efforts de retenue du siège transitent par le profilé mobile : ceci impose un dimensionnement suffisant de ce profilé mobile et de ses liaisons avec le siège et avec le profilé fixe, ce qui tend à augmenter encore le coût de l'ensemble d'assise.

La présente invention a notamment pour but de pallier ces inconvénients.

Par ailleurs, le document WO-A-98/49027, qui constitue un art antérieur au titre de l'article 54(3) CBE, décrit un ensemble d'assise du type susmentionné, dont le verrou d'accrochage comporte deux crochets adaptés pour venir s'engager sous des rebords du profilé fixe.

Selon l'invention, un ensemble d'assise du genre en question est caractérisé en ce que le verrou d'accrochage dudit pied comprend un unique organe de mâchoire qui s'étend sensiblement verticalement à partir du pied jusqu'à une extrémité libre inférieure, l'organe de mâchoire étant monté pivotant autour d'un axe parallèle à la direction longitudinale et étant mobile entre lesdites positions verrouillée et effacée, ledit organe de mâchoire comportant à son extrémité libre une griffe d'accrochage qui est apte à s'engager sous une partie du profilé fixe en empêchant la séparation du pied et du profilé fixe lorsque le verrou d'accrochage est dans sa position verrouillée, et ladite griffe d'accrochage étant suffisamment écartée du profilé fixe lorsque le verrou d'accrochage est en position effacée, pour ne pas interférer alors avec ce profilé fixe lors de la séparation du pied correspondant et dudit profilé fixe, le siège comportant en outre des moyens de blocage qui sont actionnés par un dispositif de commande de glissière et qui sont aptes à coopérer avec le profilé fixe pour empêcher tout déplacement longitudinal du siège, et en ce que le verrou d'accrochage présente une position dite de coulissement, intermédiaire entre sa position verrouillée et sa position effacée, où l'organe de mâchoire du verrou d'accrochage est suffisamment écarté du profilé fixe pour permettre un coulissement longitudinal du pied correspondant le long dudit profilé fixe, mais où la griffe d'accrochage dudit organe de mâchoire reste engagée sous le profilé fixe.

Grâce à ces dispositions, on évite les problèmes de l'art antérieur relativement à la séparation du verrou de glissière et de son dispositif de commande lorsque le siège est enlevé.

De plus, l'accrochage du pied du siège se fait directement sur le profilé fixe, ce qui renforce la solidité de l'accrochage du siège sur le plancher du véhicule.

Par ailleurs, le profilé mobile de la glissière est totalement supprimé, ce qui diminue le coût de l'ensemble d'assise. Ainsi, la glissière de l'ensemble d'assise selon l'invention présente un encombrement réduit au strict minimum et ne procure aucune gêne aux passagers du véhicule lorsque le siège est enlevé.

Dans des modes de réalisation préférés de l'invention, on peut éventuellement avoir recours en outre à l'une et/ou à l'autre des dispositions suivantes :
- les moyens de blocage comprennent un verrou de glissière qui est porté par le siège et qui est déplaçable entre, d'une part, une position verrouillée où ledit verrou de glissière coopère avec des zones de réception de verrou disposées le long du profilé fixe pour empêcher le déplacement longitudinal du siège, et d'autre part, une position déverrouillée où ledit verrou de glissière n'interfère pas avec lesdites zones de réception de verrou, le verrou de glissière étant actionné par un dispositif de commande de glissière porté par le siège ;
- les verrous de glissière et d'accrochage sont reliés entre eux par des moyens de couplage adaptés :
   . pour que, lorsque le verrou d'accrochage et le verrou de glissière sont tous les deux dans leur position verrouillée, le premier organe de mâchoire soit serré contre le profilé fixe,
   . et pour que, lors de l'actionnement du dispositif de commande de glissière pour déplacer le verrou de glissière dans sa position déverrouillée, l'organe de mâchoire soit placé dans sa position de coulissement ;
- les moyens de couplage sont adaptés :
   . pour que le verrou de glissière soit déverrouillé lorsque le verrou d'accrochage est dans sa position effacée,
   . et pour que la griffe du verrou d'accrochage soit engagée sous le profilé fixe de la glissière lorsque le verrou de glissière est dans sa position verrouillée ;
- le dispositif de commande de glissière actionne également le verrou d'accrochage, et est déplaçable entre trois positions :
   . une première position où le verrou d'accrochage et le verrou de glissière sont tous les deux dans leur position verrouillée, l'organe de mâchoire étant alors serré contre le profilé fixe de la glissière,
   . une deuxième position où le verrou de glissière est dans sa position déverrouillée et le verrou d'accrochage est dans sa position de coulissement,
   . et une troisième position où le verrou de glissière est dans sa position déverrouillée et le verrou d'accrochage est dans sa position effacée ;
- le dispositif de commande de glissière comprend un arbre de commande transversal qui est monté pivotant par rapport au siège entre lesdites première, deuxième et troisième positions du dispositif de commande de glissière, cet arbre de commande actionnant le verrou de glissière par l'intermédiaire d'une came de commande de glissière ;
- l'ensemble d'assise comporte deux glissières parallèles similaires ayant chacune un profilé fixe, et des première et deuxième paires de pieds qui comprennent chacune deux pieds portés par les deux glissières et disposés en correspondance mutuelle, chaque pied de la première paire comprenant un verrou d'accrochage susmentionné et un verrou de glissière susmentionné, ces verrous d'accrochage et de glissière des pieds de la première paire étant sollicités élastiquement vers leur position verrouillée et étant déplaçables simultanément dans leurs positions respectivement effacée et déverrouillée au moyen d'un premier organe de commande, et lesdits verrous de glissière des deux pieds de la première paire étant déplaçables simultanément dans leur position déverrouillée au moyen d'un deuxième organe de commande, sans déplacement des verrous d'accrochage dans leur position effacée ;
- chaque pied de la deuxième paire comprend un verrou d'accrochage sollicité élastiquement vers une position verrouillée où ledit verrou d'accrochage est engagé sous une partie du profilé fixe correspondant, les verrous d'accrochage des pieds de la deuxième paire étant déplaçables simultanément, au moyen d'un troisième organe de commande, dans une position effacée permettant de séparer les pieds de la deuxième paire d'avec les profilés fixes ;
- les moyens de blocage appartiennent à l'organe de mâchoire, qui est adapté pour coopérer avec des zones de réception de verrou du profilé fixe pour bloquer le siège lorsque ledit organe de mâchoire est dans sa position verrouillée ;
- le dispositif de commande de glissière est adapté pour relever l'organe de mâchoire en appliquant la griffe d'accrochage sous le profilé fixe, avec serrage, lorsque ledit organe de mâchoire est dans sa position verrouillée ;
- la griffe d'accrochage présente des reliefs orientés vers le haut qui sont adaptés pour s'engager, lorsque l'organe de mâchoire est dans sa position verrouillée, dans des reliefs complémentaires ménagés sous la partie correspondante du profilé fixe ;
- le dispositif de commande de glissière est déplaçable entre trois positions :
   . une première position où l'organe de mâchoire est serré contre le profilé fixe de la glissière,
   . une deuxième position où l'organe de mâchoire est dans une position de coulissement où la griffe de cet organe de mâchoire reste engagée sous la partie correspondante du profilé fixe, mais où un certain jeu est ménagé entre ledit organe d'accrochage et le profilé fixe pour permettre un déplacement longitudinal du siège,
   . et une troisième position où l'organe de mâchoire est dans sa position effacée ;
- le dispositif de commande de glissière comprend un arbre de commande transversal qui est monté pivotant par rapport au siège entre des positions angulaires de verrouillage et de déverrouillage correspondant respectivement aux positions verrouillée et effacée de l'organe de mâchoire, cet arbre de commande actionnant l'organe de mâchoire par l'intermédiaire d'une première came de commande d'accrochage qui est orientée axialement par rapport à l'arbre de commande et qui est adaptée pour faire pivoter ledit organe de mâchoire vers sa position effacée lorsque l'arbre de commande est dans sa position angulaire de verrouillage, l'organe de mâchoire étant par ailleurs sollicité élastiquement vers sa position verrouillée ;
- l'organe de mâchoire est monté pivotant avec un certain jeu vertical sur le pied correspondant, l'arbre de commande transversal comportant en outre une deuxième came de commande d'accrochage qui est orientée radialement par rapport audit arbre de commande et qui coopère avec l'organe de mâchoire pour :
   . relever cet organe de mâchoire en appliquant la griffe d'accrochage sous le profilé fixe, avec serrage, lorsque l'arbre de commande est dans sa position angulaire de verrouillage,
   . et abaisser ledit organe de mâchoire en ménageant un certain jeu entre la griffe d'accrochage et le profilé fixe lorsque l'arbre de commande est dans une position angulaire intermédiaire entre ses positions angulaires de verrouillage et de déverrouillage ;
- la partie du profilé fixe, sous laquelle s'engage la griffe d'accrochage de l'organe de mâchoire, présente une rainure longitudinale ouverte vers le bas tandis que ladite griffe d'accrochage présente un bec qui fait saillie vers le haut et qui est adapté pour s'engager dans ladite rainure lorsque l'arbre de commande est dans sa position angulaire de verrouillage;
- le profilé fixe comporte d'une part, un corps profilé à base d'aluminium qui est destiné à être solidarisé avec le plancher du véhicule, et d'autre part, une tôle pliée en acier qui recouvre partiellement le corps en aluminium et qui comporte des crans formant lesdites zones de réception de verrou ;
- l'ensemble d'assise comporte deux glissières parallèles similaires ayant chacune un profilé fixe, au moins deux des pieds du siège étant montés de façon amovible sur les deux profilés fixes, respectivement au moyen de deux organes de mâchoire ayant respectivement des griffes d'accrochage qui s'étendent dans des directions mutuellement opposées ;
- le profilé fixe présente sensiblement une section en U ouverte vers le haut, avec une base sensiblement horizontale et deux ailes sensiblement verticales, une des ailes comportant un rebord sensiblement horizontal faisant saillie vers l'autre aile, l'organe de mâchoire étant adapté pour pénétrer entre les deux ailes du profilé fixe de façon que la griffe d'accrochage puisse s'engager sous le rebord horizontal dudit profilé fixe ;
- le pied comportant l'organe de mâchoire présente un organe de guidage faisant saillie vers le bas, qui est adapté pour s'engager entre les ailes du profilé fixe avec un faible jeu ;
- le pied comportant l'organe de mâchoire est monté pivotant sur le siège selon un axe de rotation horizontal transversal, avec un faible jeu angulaire selon un axe horizontal longitudinal parallèle au profilé fixe ;
- le pied comportant l'organe de mâchoire repose sur le profilé fixe par l'intermédiaire d'un patin de glissement souple qui est adapté pour maintenir la griffe d'accrochage appuyée sous le profilé fixe tant que le siège n'est pas occupé par un passager, et pour se comprimer lorsque le siège est occupé par un passager, en ménageant alors un certain jeu vertical entre la griffe d'accrochage et le profilé fixe ;
- la griffe d'accrochage est recouverte au moins partiellement par une garniture en matériau souple, qui est adaptée pour venir en appui sous le profilé fixe tant que le siège n'est pas occupé par un passager.

D'autres caractéristiques et avantages de l'invention apparaîtront au cours de la description suivante de plusieurs de ses formes de réalisation, données à titre d'exemples non limitatifs, en regard des dessins joints.

Sur les dessins :
- la figure 1 est une vue en perspective d'un ensemble d'assise selon une première forme de réalisation de l'invention,
- la figure 2 est une vue en coupe verticale transversale d'un des pieds avant du siège appartenant à l'ensemble d'assise de la figure 1, en position verrouillée sur une glissière,
- la figure 3 est une vue de détail en perspective de certains éléments visibles sur la figure 2,
- les figures 4 et 5 sont des vues similaires à la figure 2, respectivement en position de coulissement du siège le long des glissières et en position de démontage du siège,
- la figure 6 est une vue similaire à la figure 2, pour l'un des pieds arrière du siège,
- la figure 7 est une vue de côté de l'ensemble d'assise de la figure 1,
- et la figure 8 est une vue similaire à la figure 4, dans une deuxième forme de réalisation de l'invention.

Sur les différentes figures, les mêmes références désignent des éléments identiques ou similaires.

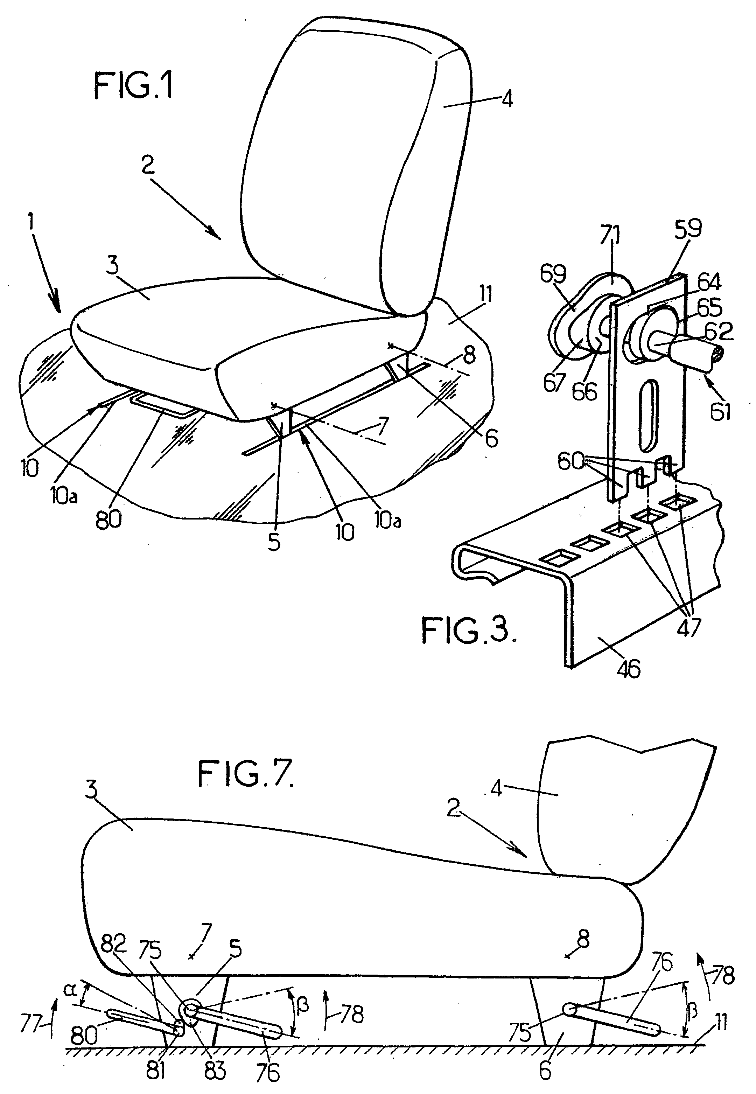

Dans la première forme de réalisation de l'invention, qui est représentée sur les figures 1 à 7, l'ensemble d'assise 1 comprend un siège 2 doté d'une assise 3 et d'un dossier 4 (voir figure 1), l'assise 3 reposant sur quatre pieds, savoir une paire de pieds avant 5 et une paire de pieds arrière 6.

Les pieds avant 5 sont de préférence montés pivotants sur l'assise 6 autour d'un premier axe horizontal transversal 7 et les pieds arrière 6 sont de préférence montés pivotants sur l'assise autour d'un deuxième axe horizontal transversal 8.

De plus, l'ensemble d'assise comporte en outre deux glissières parallèles 10 qui sont fixées sur le plancher 11 du véhicule et de préférence entièrement intégrées à ce plancher de façon que pour les utilisateurs du véhicule, ces glissières 10 se présentent extérieurement uniquement sous la forme d'une fente 10a ménagée dans le plancher.

Chaque glissière 10 porte les deux pieds 5,6 qui sont situés d'un même côté du siège de façon à permettre un coulissement du siège 2 vers l'avant ou vers l'arrière dans la direction longitudinale.

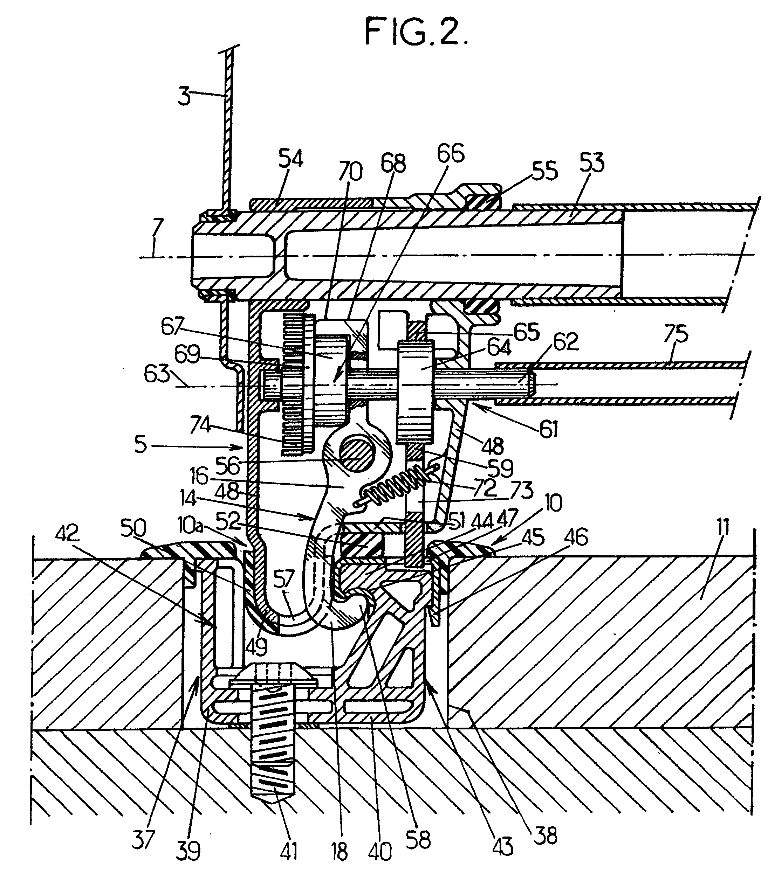

Comme on peut le voir sur la figure 2, chaque glissière 10 se réduit à un profilé fixe 37 qui présente une section en U ouverte vers le haut, et qui est logé dans une rigole 38 ménagée dans le plancher 11 du véhicule.

Le profilé fixe 37 comporte une base horizontale 40 fixée au plancher 11 par des vis 41 ou similaire, et deux ailes verticales 42,43, l'aile 43 qui est disposée vers l'intérieur du siège présentant un rebord horizontal supérieur 44 orienté vers l'intérieur du U, lequel rebord présente avantageusement une légère rainure inférieure 45

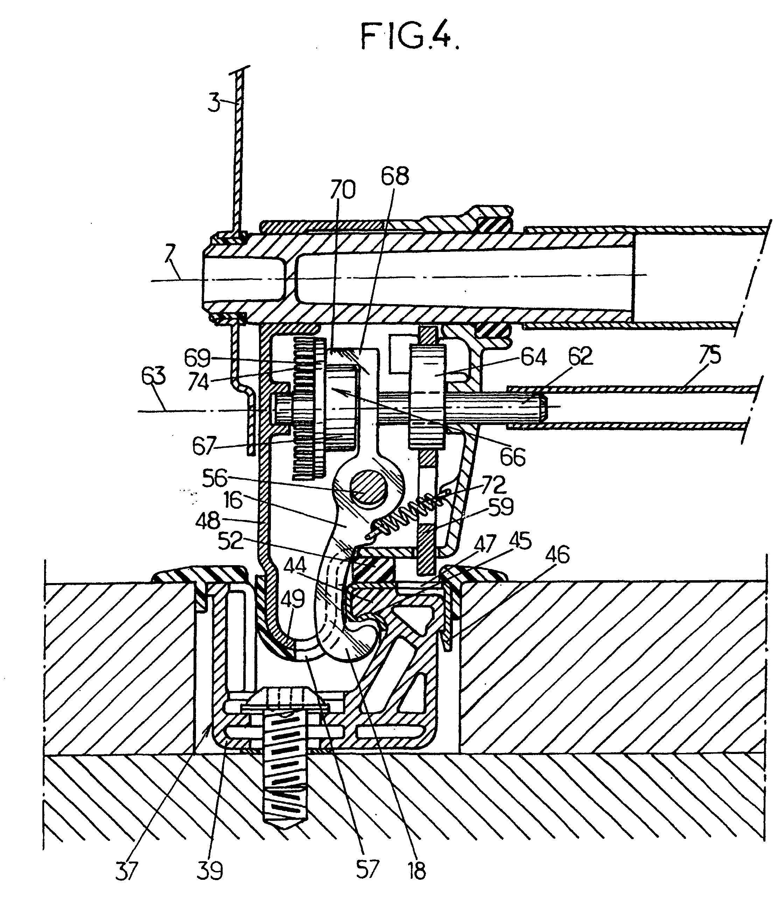

Avantageusement, le profilé fixe comprend :
- un corps profilé 39 réalisé de préférence en alliage léger à base d'aluminium, ce corps 39 présentant lui-même une section en U,
- et une tôle pliée en acier 46 qui épouse la partie supérieure de l'aile 43 en suivant également la forme du rebord 44 et de sa rainure inférieure 45, cette tôle pliée 46 présentant des évidements 47 qui forment des crans répartis sur la longueur de la tôle 46 (voir également figure 3).

Par ailleurs, chaque pied 5,6 comporte un corps rigide creux 48 qui comprend un doigt de guidage inférieur 49 pénétrant avec un faible jeu entre les ailes verticales 42,43 du profilé fixe 37, le doigt de guidage 49 étant de préférence muni d'une garniture extérieure 50 en matière plastique afin de limiter les frottements et les bruits au contact du profilé fixe.

Le corps extérieur 48 de chaque pied 5,6 comporte en outre une face intérieure sensiblement horizontale 51, au-dessus du rebord 44 du profilé fixe correspondant, ladite face inférieure 51 étant munie d'un patin de glissement 52 en matière plastique ou autre (de préférence légèrement souple et compressible), ou le cas échéant d'un organe de roulement, afin de faciliter le coulissement du siège le long des profilés fixes.

Par ailleurs, chaque pied 5,6 est monté pivotant autour d'un moyeu fixe 53 qui est solidaire de l'assise 3 et qui s'étend selon l'axe de pivotement 7,8 correspondant.

De préférence, le montage pivotant du pied 5,6 autour du moyeu fixe 53 est obtenu au moyen de deux paliers, décalés latéralement, savoir :
- un premier palier 54 qui permet un pivotement sensiblement sans jeu autour du moyeu 53,
- et un deuxième palier formé par une bague en élastomère 55 qui permet aux pieds 5,6 d'avoir un certain mouvement angulaire autour d'un axe horizontal longitudinal parallèle au profilé fixe 37, en facilitant ainsi le rattrapage des défauts d'alignement des glissières selon la direction horizontale transversale (perpendiculaire aux glissières) lors de la mise en place du siège 2 sur le plancher 11 du véhicule.

Par ailleurs, le corps extérieur 48 de chaque pied avant 5 comporte intérieurement :
- un verrou d'accrochage 14, formé en l'occurrence par un organe de mâchoire ou crochet 16, lequel est monté pivotant avec un certain jeu vertical autour d'une tige 56 qui est solidaire du corps 48 du pied et qui s'étend dans la direction longitudinale, cet organe de mâchoire 16 s'étendant vers le bas à travers une fente 57 du corps extérieur 48, jusqu'à une griffe 18 qui fait saillie latéralement vers l'aile verticale 43 du profilé fixe et qui est adaptée pour s'engager sous le rebord 44 de ce profilé (les griffes 18 des deux pieds avant 5 sont donc mutuellement opposées), ladite griffe d'accrochage se terminant de préférence par un bec relevé 58 qui est adapté pour s'engager dans la rainure 45 formée sous le rebord 44 du profilé fixe,
- et un verrou de glissière 59 qui est déplaçable verticalement par rapport au corps 48 du pied 5 correspondant et qui comporte une ou plusieurs dents inférieures 60 adaptées pour s'engager dans les crans 47 de la tôle pliée 46, comme on peut le voir sur les figures 10 et 11, le verrou de glissière 59 pouvant être par exemple monté coulissant verticalement dans le corps extérieur 48 du pied.

Le verrou d'accrochage 14 et le verrou de glissière 59 de chaque pied 5 sont actionnés par un même dispositif de commande 61 appartenant au pied considéré.

Ce dispositif de commande 61 comprend :
- un arbre de commande 62 monté pivotant sur le pied 5 autour d'un axe horizontal transversal 63,
- un premier disque excentrique 64 qui est fixé sur l'arbre de commande 62 et qui forme une came de commande de glissière, ce disque étant logé sensiblement sans jeu vertical dans une lumière oblongue 65 appartenant au verrou de glissière 59, cette lumière- oblongue 65 étant allongée dans la direction horizontale longitudinale,
- un deuxième disque excentrique 66 qui est fixé sur l'arbre de commande 62 et dont la périphérie radialement extérieure 67 forme une came au-dessus de laquelle s'appuie un rebord 68 formé à l'extrémité supérieure de l'organe de mâchoire 16, laquelle extrémité supérieure traverse l'arbre de commande 62 avec un certain jeu vertical,
- une collerette 69 contre laquelle bute l'extrémité 70 du rebord 68, cette collerette 69 formant une surface de came axiale en forme de rampe 71 (figure 3), la rampe 71 et la came 67 étant dites ci-après première et deuxième cames de commande d'accrochage,
- un ressort 72 qui relie l'organe de mâchoire 16 à l'une des parois du corps extérieur 48 du pied 5, par exemple en traversant une lumière 73 du verrou 59, de façon à solliciter l'organe de mâchoire 16 vers une position verrouillée où la griffe d'accrochage 18 de cet organe de mâchoire est engagée sous le rebord 44 du profilé fixe,
- et un ressort 74, notamment un ressort à spirale, qui relie l'arbre de commande 62 au corps extérieur 48 du pied, pour solliciter ledit arbre de commande vers une première position angulaire.

Dans cette première position angulaire :
- la came de commande de glissière 64 fait descendre le verrou de glissière 59 dans une position verrouillée où les dents 60 dudit verrou sont engagées dans les crans 47 du profilé fixe,
- la rampe 71 de la collerette 70 ne se trouve pas en correspondance avec le rebord 68 de l'organe de mâchoire de sorte que la griffe 18 de l'organe de mâchoire 16 se trouve sous le rebord 44 du profilé fixe,
- et la première came de commande d'accrochage coopère avec le rebord 68 de l'organe de mâchoire 16 pour déplacer cet organe de mâchoire vers le haut en appliquant le bec 58 de sa griffe d'accrochage dans la rainure 45 du profilé fixe, de façon à serrer le patin de glissement 52 entre le corps extérieur 48 du pied 5,6 et le profilé fixe.

A partir de la première position angulaire ou position de repos représentée sur la figure 10, l'arbre de commande 62 de chaque pied 5 peut pivoter jusqu'à une deuxième position angulaire permettant de faire coulisser le siège 2 vers l'avant ou vers l'arrière dans les glissières 10 sans permettre l'enlèvement dudit siège, ou jusqu'à une troisième position angulaire permettant de séparer le pied 5 en question de la glissière 10 correspondante.

Lorsque l'arbre de commande 62 a pivoté d'un certain angle α dans un sens angulaire prédéterminé à partir de sa première position angulaire, ledit arbre de commande se retrouve dans sa deuxième position angulaire, représentée sur la figure 4.

Dans cette position :
- la came de commande de glissière 64 soulève le verrou de glissière 59 jusqu'à une position de déverrouillage où il ne coopère pas avec les crans 47 du profilé fixe,
- la deuxième came de commande d'accrochage 67 coopère avec le rebord 68 pour permettre à l'organe de mâchoire 16 de se déplacer vers le bas sur la tige 56 (le ressort 72 est alors dans un état détendu, ce qui rend possible ce mouvement), de sorte que l'organe de mâchoire 16 se trouve alors dans une position dite de coulissement où ledit organe de mâchoire est séparé du profilé fixe 37 par un certain jeu,
- et la première came de commande d'accrochage 71. ne coopère toujours pas avec l'extrémité 70 du rebord 68, de sorte que la griffe 18 de l'organe de mâchoire 16 reste toujours engagée sous le rebord 44 du profilé fixe.

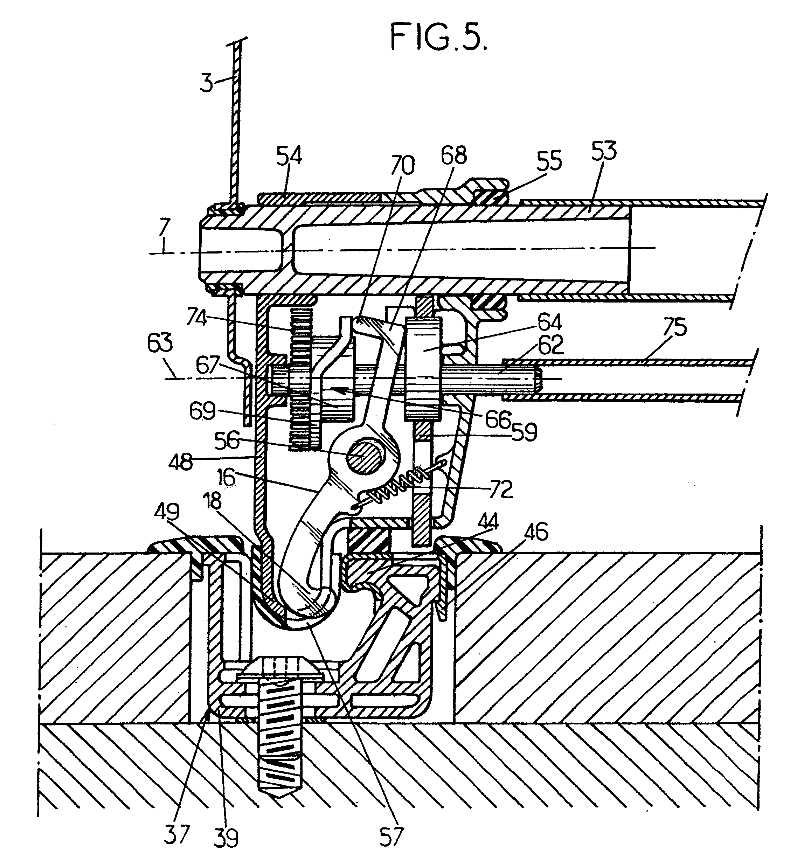

Lorsque l'arbre de commande 62 pivote sur un angle β supérieur à l'angle α dans le sens angulaire susmentionné à partir de sa première position angulaire, jusqu'à la troisième position angulaire représentée sur la figure 5 :
- la came de commande de glissière 66 maintient le verrou de glissière 59 en position déverrouillée,
- et la première came de commande d'accrochage 71 appuie axialement sur l'extrémité 70 du rebord 68, en faisant pivoter l'organe de mâchoire 16 vers l'intérieur du doigt de guidage 49 au travers de la fente 57, jusqu'à une position effacée où la griffe 18 de l'organe de mâchoire ne fait plus saillie sous le rebord 44 du profilé fixe et permet ainsi de séparer le pied 5 de la glissière.

Chaque pied arrière 6 est similaire au pied avant 5 décrit ci-dessus, et pourrait même être identique audit pied avant. Toutefois, de préférence, les pieds arrière se distinguent des pieds avant par les différences suivantes:
- l'organe de mâchoire 16 est de préférence monté pivotant sans jeu vertical sur la tige longitudinale 56,
- le pied 6 ne comporte pas le disque excentrique 66,
- la griffe 18 comporte une garniture supérieure 79 en matière plastique ou autre matériau relativement souple, qui est interposée verticalement entre ladite griffe 18 et la sous-face du rebord 44 du profilé fixe lorsque l'organe de mâchoire 16 est en position verrouillée,
- et le pied 6 ne comporte pas de verrou de glissière 59 ni de came de commande de glissière 64.

Lorsque l'organe de mâchoire 16 du pied arrière est en position verrouillée, la griffe 18 de cet organe de mâchoire n'est normalement pas en contact direct avec le profilé fixe, puisque ladite griffe est séparée du profilé fixe par la garniture 79.

En revanche, en cas d'accident subi par le véhicule dans lequel est monté le siège, la garniture 79 est écrasée et la griffe 18 vient en contact intime avec le fond de la rainure 45 qui ménagé sous le rebord 44 du profilé fixe.

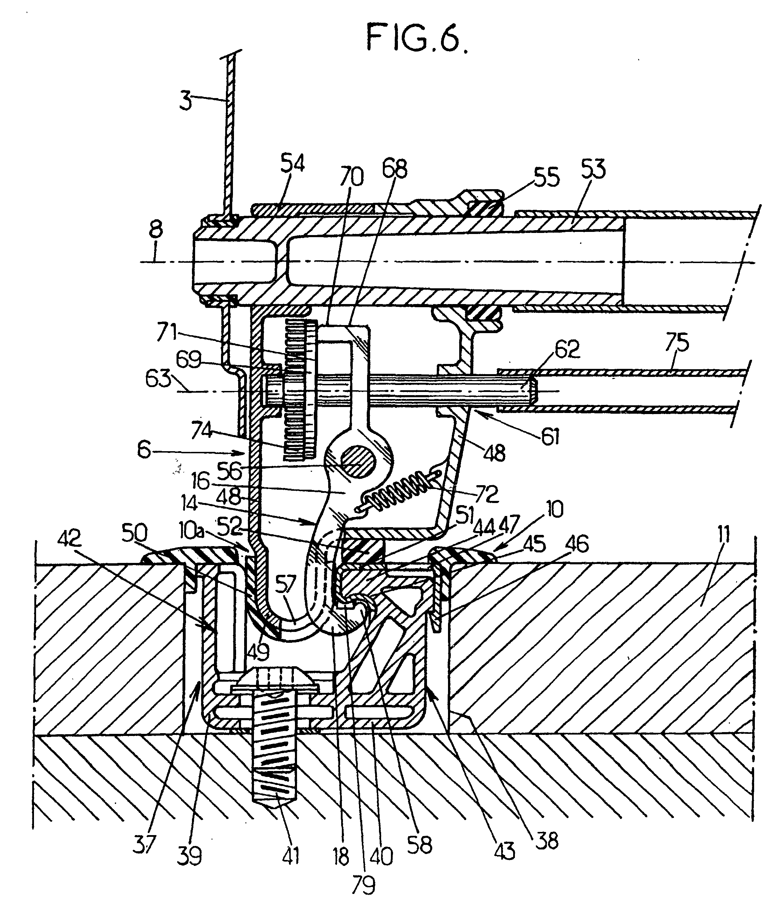

L'arbre de commande 62 de chaque pied arrière est déplaçable uniquement entre les première et troisième positions angulaires susmentionnées, pour placer le verrou d'accrochage 14 correspondant soit dans sa position verrouillée représentée sur la figure 6, soit dans une position déverrouillée similaire à la position représentée sur la figure 13 pour le pied avant 5.

Ainsi, lorsque les arbres de commande 62 des pieds avant 5 du siège sont placés dans leur deuxième position angulaire pour permettre le coulissement du siège vers l'avant ou vers l'arrière le long des glissières 10, les organes de mâchoire 16 des pieds arrière 6 sont laissés dans leur position verrouillée, et le coulissement des pieds arrière 6 le long des glissières 10 est obtenu simplement par glissement du patin 52 et des garnitures 50 et 79 le long du profilé fixe 37.

Avantageusement, ce glissement être en outre facilité par un certain écrasement du patin 52 lorsque le siège est occupé par un passager, ce léger écrasement ménageant un jeu vertical entre d'une part, le rebord 44 du profilé fixe, et d'autre part, la griffe 18 et la garniture 79 de l'organe de mâchoire 16.

Les arbres de commande 62 des deux pieds avant 5 sont solidarisés entre eux par l'intermédiaire d'une barre de liaison rigide 75 notamment tubulaire, de même que les arbres de commande 62 des deux pieds arrière 6. Les dispositifs de commande des pieds avant 5 ou des pieds arrière 6 sont de préférence actionnés par l'intermédiaire de ces barres de liaison.

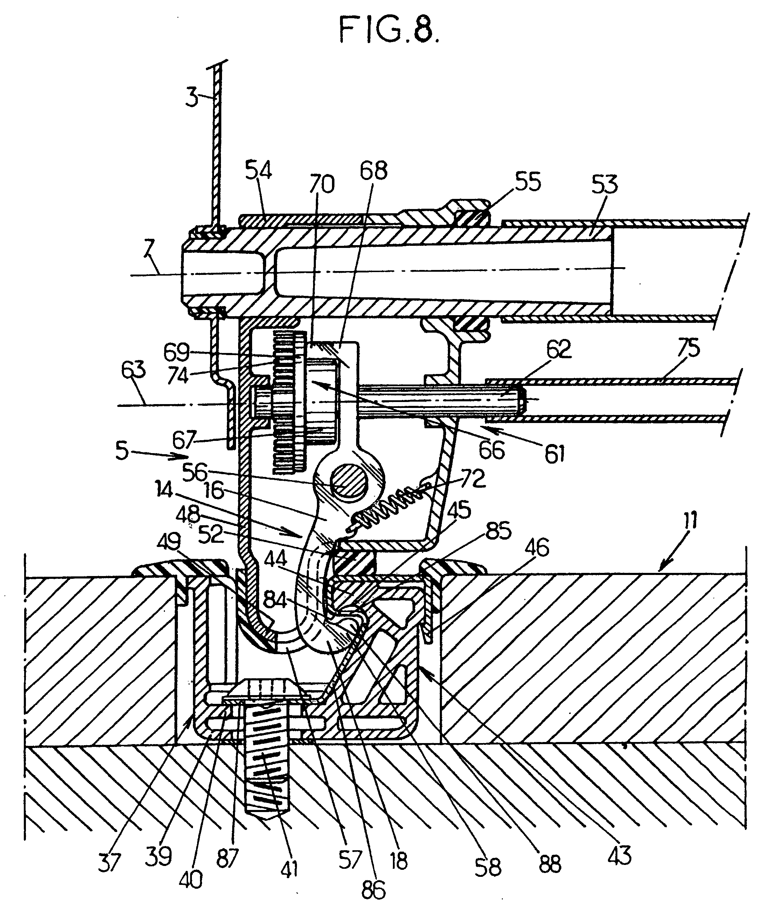

A titre d'exemple non limitatif, comme représenté sur la figure 7, chacune des barres de liaison 75 avant et arrière peut présenter une partie coudée 76 formant un palonnier s'étendant vers l'arrière et accessible à un utilisateur.

Le palonnier 76 avant peut pivoter vers le haut dans le sens de la flèche 78, sur ledit angle β, en déplaçant les arbres de commande 62 des deux pieds avant 5 jusqu'à leur troisième position angulaire permettant de séparer lesdits pieds avant des glissières 10, tandis que le palonnier 76 arrière peut pivoter vers le haut du même angle β dans le sens de la flèche 78, pour faire pivoter les arbres de commande 62 des pieds arrière 6 jusqu'à leur troisième position angulaire, en permettant ainsi de séparer les pieds arrière 6 des glissières 10.

Lorsqu'on actionne à la fois les palonniers 76 avant et arrière, on peut donc enlever complètement le siège 2 pour le sortir du véhicule ou le disposer à un autre emplacement dans le véhicule, et lorsqu'on actionne uniquement le palonnier 76 arrière, on peut faire pivoter le siège 2 sur ses pieds avant 5 pour le placer en position "portefeuille", c'est-à-dire avec son assise 3 disposée sensiblement verticalement.

Par ailleurs, pour régler la position longitudinale du siège 2, on fait pivoter les arbres de commande 62 des pieds avant uniquement de l'angle α susmentionné pour les placer dans leur deuxième position angulaire.

A cet effet, le siège 2 peut comprendre en outre un palonnier 80 supplémentaire qui est formé par exemple par un tube coudé 81 monté pivotant sur les deux pieds avant 5, et qui est orienté vers l'avant.

Ce palonnier 80 est solidaire d'une came 82 adaptée pour coopérer avec une came complémentaire 83 solidaire de la barre de liaison 75 des pieds avant pour entraîner ladite barre de liaison dans le sens angulaire 78 susmentionné lorsque le palonnier 80 pivote dans le sens opposé 77.

Le tube 81 est monté sur les pieds avant 5 de façon à pouvoir pivoter uniquement avec un débattement angulaire α, ou tout au moins avec un débattement angulaire adapté pour que la barre de liaison 75 pivote uniquement de l'angle α dans le sens angulaire 78 lorsqu'on actionne le palonnier 80.

La deuxième forme de réalisation de l'invention, représentée sur la figure 8, est similaire à la forme de réalisation représentée sur les figures 1 à 7, et elle s'en distingue par les points suivants :
- la tôle pliée en acier 46 forme un rabat inférieur horizontal 84 qui est disposé au-dessous de la rainure 45 et dans lequel sont percés des trous juxtaposés 85 formant des crans,
- le rabat 84 est prolongé vers le bas par une âme 85 qui longe la face intérieure de l'aile 43 du profilé fixe,
- l'âme 85 est elle-même prolongée par une base horizontale 86 qui repose sur la base 40 du profilé fixe et qui est solidarisée avec cette base 40 par les vis 41 servant à fixer le profilé fixe 37 sur le plancher du véhicule,
- la tôle 46 ne comporte pas les crans 47, et le pied avant 5 ne comporte pas le verrou vertical 59 ni la came rotative 64,
- et les griffes d'accrochage 18 des pieds avant comportent des dents 88 adaptées pour s'engager dans les crans 85 de la tôle pliée 46 en pénétrant dans la rainure 45 du profilé fixe lorsque les organes de mâchoire 16 sont dans leur position verrouillée.

## Revendications

1. Ensemble d'assise (1) pour véhicule, comportant :
- au moins une première glissière (10) comprenant un profilé fixe (37) qui est destiné à être solidarisé avec le plancher (11) du véhicule et qui s'étend dans une direction dite longitudinale,
- et un siège (2) qui est supporté par des pieds (5, 6) dont au moins un est monté de façon amovible sur la glissière (10) pour permettre de désolidariser le siège de la glissière, ce pied comportant un verrou d'accrochage (14) qui est déplaçable par des moyens de commande (61, 76) entre, d'une part, une position verrouillée où ledit verrou d'accrochage coopère avec la glissière pour solidariser le pied du siège avec ladite glissière, et d'autre part, une position effacée où le pied peut se séparer de la glissière,
**caractérisé en ce que** le verrou d'accrochage (14) dudit pied comprend un unique organe de mâchoire (16) qui s'étend sensiblement verticalement à partir du pied (5, 6) jusqu'à une extrémité libre inférieure, l'organe de mâchoire étant monté pivotant autour d'un axe parallèle à la direction longitudinale et étant mobile entre lesdites positions verrouillée et effacée, ledit organe de mâchoire comportant à son extrémité libre une griffe d'accrochage (18) qui est apte à s'engager sous une partie du profilé fixe (37) en empêchant la séparation du pied (5, 6) et du profilé fixe lorsque le verrou d'accrochage (14) est dans sa position verrouillée, et ladite griffe d'accrochage (18) étant suffisamment écartée du profilé fixe (37) lorsque le verrou d'accrochage est en position effacée, pour ne pas interférer alors avec ce profilé fixe lors de la séparation du pied correspondant et dudit profilé fixe, le siège comportant en outre des moyens de blocage (59, 88) qui sont actionnés par un dispositif de commande de glissière (61) porté par le siège et qui sont aptes à coopérer avec le profilé fixe pour empêcher tout déplacement longitudinal du siège,
**et en ce que** le verrou d'accrochage (14) présente une position dite de coulissement, intermédiaire entre sa position verrouillée et sa position effacée, où l'organe de mâchoire (16) du verrou d'accrochage est suffisamment écarté du profilé fixe (37) pour permettre un coulissement longitudinal du pied (5) correspondant le long dudit profilé fixe, mais où la griffe d'accrochage (18) dudit organe de mâchoire reste engagée sous le profilé fixe.

2. Ensemble d'assise selon la revendication 1, dans lequel les moyens de blocage comprennent un verrou de glissière (59) qui est porté par le siège (2) et qui est déplaçable entre, d'une part, une position verrouillée où ledit verrou de glissière coopère avec des zones de réception de verrou (47) disposées le long du profilé fixe (37) pour empêcher le déplacement longitudinal du siège, et d'autre part, une position déverrouillée où ledit verrou de glissière n'interfère pas avec lesdites zones de réception de verrou.

3. Ensemble d'assise selon la revendication 2, dans lequel les verrous de glissière (59) et d'accrochage (14) sont reliés entre eux par des moyens de couplage (61) adaptés :
- pour que, lorsque le verrou d'accrochage (16) et le verrou de glissière (59) sont tous les deux dans leur position verrouillée, le premier organe de mâchoire (16) soit serré contre le profilé fixe,
- et pour que, lors de l'actionnement du dispositif de commande de glissière (76, 62, 64) pour déplacer le verrou de glissière dans sa position déverrouillée, l'organe de mâchoire (16) soit placé dans sa position de coulissement.

4. Ensemble d'assise selon la revendication 12 ou la revendication 3, dans lequel les verrous de glissière (59) et d'accrochage (14) sont reliés entre eux par des moyens de couplage (61) adaptés :
- pour que le verrou de glissière (59) soit déverrouillé lorsque le verrou d'accrochage (16) est dans sa position effacée,
- et pour que la griffe (18) du verrou d'accrochage soit engagée sous le profilé fixe (37) de la glissière lorsque le verrou de glissière (59) est dans sa position verrouillée.

5. Ensemble d'assise selon la revendication 3 ou la revendication 4, dans lequel le dispositif de commande de glissière (61) actionne également le verrou d'accrochage (14), et est déplaçable entre trois positions :
- une première position où le verrou d'accrochage (14) et le verrou de glissière (59) sont tous les deux dans leur position verrouillée, l'organe de mâchoire (16) étant alors serré contre le profilé fixe (37) de la glissière,
- une deuxième position où le verrou de glissière (59) est dans sa position déverrouillée et le verrou d'accrochage (16) est dans sa position de coulissement,
- et une troisième position où le verrou de glissière (59) est dans sa position déverrouillée et le verrou d'accrochage (14) est dans sa position effacée.

6. Ensemble d'assise selon l'une quelconque des revendications 2 à 5, dans lequel le dispositif de commande de glissière (61) comprend un arbre de commande (62) transversal qui est monté pivotant par rapport au siège, cet arbre de commande actionnant le verrou de glissière (59) par l'intermédiaire d'une came de commande de glissière (64).

7. Ensemble d'assise selon l'une quelconque des revendications 2 à 6, comportant deux glissières parallèles (10) similaires ayant chacune un profilé fixe (37), et des première et deuxième paires de pieds qui comprennent chacune deux pieds (5,6) portés par les deux glissières et disposés en correspondance mutuelle, chaque pied (5) de la première paire comprenant un verrou d'accrochage (14) susmentionné et un verrou de glissière (59) susmentionné, ces verrous d'accrochage (14) et de glissière (59) des pieds de la première paire étant sollicités élastiquement vers leur position verrouillée et étant déplaçables simultanément dans leurs positions respectivement effacée et déverrouillée au moyen d'un premier organe de commande (76), et lesdits verrous de glissière (59) des deux pieds (5) de la première paire étant déplaçables simultanément dans leur position déverrouillée au moyen d'un deuxième organe de commande (80), sans déplacement des verrous d'accrochage (14) dans leur position effacée.

8. Ensemble d'assise selon la revendication 7, dans lequel chaque pied (6) de la deuxième paire comprend un verrou d'accrochage (14) sollicité élastiquement vers une position verrouillée où ledit verrou d'accrochage est engagé sous une partie du profilé fixe correspondant, les verrous d'accrochage des pieds (6) de la deuxième paire étant déplaçables simultanément, au moyen d'un troisième organe de commande (76), dans une position effacée permettant de séparer les pieds de la deuxième paire d'avec les profilés fixes (37).

9. Ensemble d'assise selon la revendication 1, dans lequel les moyens de blocage (88) appartiennent à l'organe de mâchoire (16), qui est adapté pour coopérer avec des zones de réception de verrou (85) du profilé fixe pour bloquer le siège lorsque ledit organe de mâchoire (16) est dans sa position verrouillée.

10. Ensemble d'assise selon la revendication 9, dans lequel le dispositif de commande de glissière (61) est adapté pour relever l'organe de mâchoire en appliquant la griffe d'accrochage (18) sous le profilé fixe (37), avec serrage, lorsque ledit organe de mâchoire est dans sa position verrouillée.

11. Ensemble d'assise selon la revendication 10, dans lequel la griffe d'accrochage (18) présente des reliefs (88) orientés vers le haut qui sont adaptés pour s'engager, lorsque l'organe de mâchoire est dans sa position verrouillée, dans des reliefs complémentaires (85) ménagés sous la partie correspondante (44) du profilé fixe.

12. Ensemble d'assise selon l'une quelconque des revendications 10 et 11, dans lequel le dispositif de commande de glissière (61) est déplaçable entre trois positions :
- une première position où l'organe de mâchoire (16) est serré contre le profilé fixe (37) de la glissière,
- une deuxième position où l'organe de mâchoire (16) est dans une position de coulissement où la griffe (18) de cet organe de mâchoire reste engagée sous la partie correspondante (44) du profilé fixe, mais où un certain jeu est ménagé entre ledit organe d'accrochage et le profilé fixe pour permettre un déplacement longitudinal du siège,
- et une troisième position où l'organe de mâchoire (16) est dans sa position effacée.

13. Ensemble d'assise selon l'une quelconque des revendications 2 à 12, dans lequel le dispositif de commande de glissière (61) comprend un arbre de commande (62) transversal qui est monté pivotant par rapport au siège entre des positions angulaires de verrouillage et de déverrouillage correspondant respectivement aux positions verrouillée et effacée de l'organe de mâchoire, cet arbre de commande actionnant l'organe de mâchoire (16) par l'intermédiaire d'une première came de commande d'accrochage (71) qui est orientée axialement par rapport à l'arbre de commande (62) et qui est adaptée pour faire pivoter ledit organe de mâchoire vers sa position effacée lorsque l'arbre de commande est dans sa position angulaire de verrouillage, l'organe de mâchoire (16) étant par ailleurs sollicité élastiquement vers sa position verrouillée.

14. Ensemble d'assise selon la revendication 13, dans lequel l'organe de mâchoire (16) est monté pivotant avec un certain jeu vertical sur le pied (5, 6) correspondant, l'arbre de commande transversal (62) comportant en outre une deuxième came de commande d'accrochage (67) qui est orientée radialement par rapport audit arbre de commande et qui coopère avec l'organe de mâchoire pour :
- relever cet organe de mâchoire (16) en appliquant la griffe d'accrochage (18) sous le profilé fixe (37), avec serrage, lorsque l'arbre de commande (62) est dans sa position angulaire de verrouillage,
- et abaisser ledit organe de mâchoire (16) en ménageant un certain jeu entre la griffe d'accrochage (18) et le profilé fixe (37) lorsque l'arbre de commande (62) est dans une position angulaire intermédiaire entre ses positions angulaires de verrouillage et de déverrouillage.

15. Ensemble d'assise selon la revendication 14, dans lequel la partie (44) du profilé fixe, sous laquelle s'engage la griffe d'accrochage (18) de l'organe de mâchoire, présente une rainure longitudinale (45) ouverte vers le bas tandis que ladite griffe d'accrochage présente un bec (58) qui fait saillie vers le haut et qui est adapté pour s'engager dans ladite rainure lorsque l'arbre de commande (62) est dans sa position angulaire de verrouillage.

16. Ensemble d'assise selon l'une quelconque des revendications 2 à 15, dans lequel le profilé fixe (37) comporte d'une part, un corps profilé (39) à base d'aluminium qui est destiné à être solidarisé avec le plancher (11) du véhicule, et d'autre part, une tôle pliée (46) en acier qui recouvre partiellement le corps en aluminium et qui comporte des crans (47, 85) formant lesdites zones de réception de verrou.

17. Ensemble d'assise selon l'une quelconque des revendications précédentes, comportant deux glissières parallèles (10) similaires ayant chacune un profilé fixe (37), au moins deux des pieds (5, 6) du siège étant montés de façon amovible sur les deux profilés fixes, respectivement au moyen de deux organes de mâchoire (16) ayant respectivement des griffes d'accrochage (18) qui s'étendent dans des directions mutuellement opposées.

18. Ensemble d'assise selon l'une quelconque des revendications précédentes, dans lequel le profilé fixe (37) présente sensiblement une section en U ouverte vers le haut, avec une base (40) sensiblement horizontale et deux ailes (42, 43) sensiblement verticales, une (43) des ailes comportant un rebord (44) sensiblement horizontal faisant saillie vers l'autre aile (42), l'organe de mâchoire (16) étant adapté pour pénétrer entre les deux ailes du profilé fixe de façon que la griffe d'accrochage (18) puisse s'engager sous le rebord horizontal (44) dudit profilé fixe.

19. Ensemble d'assise selon la revendication 18, dans lequel le pied (5, 6) comportant l'organe de mâchoire (16) présente un organe de guidage (49) faisant saillie vers le bas, qui est adapté pour s'engager entre les ailes (42, 43) du profilé fixe avec un faible jeu.

20. Ensemble d'assise selon l'une quelconque des revendications précédentes, dans lequel le pied (5, 6) comportant l'organe de mâchoire (16) est monté pivotant sur le siège selon un axe de rotation horizontal transversal (7, 8), avec un faible jeu angulaire selon un axe horizontal longitudinal parallèle au profilé fixe.

21. Ensemble d'assise selon l'une quelconque des revendications précédentes, dans lequel le pied (5, 6) comportant l'organe de mâchoire (16) repose sur le profilé fixe (37) par l'intermédiaire d'un patin de glissement (52) souple qui est adapté pour maintenir la griffe d'accrochage (18) appuyée sous le profilé fixe (37) tant que le siège n'est pas occupé par un passager, et pour se comprimer lorsque le siège est occupé par un passager, en ménageant alors un certain jeu vertical entre la griffe d'accrochage et le profilé fixe.

22. Ensemble d'assise selon la revendication 21, dans lequel la griffe d'accrochage (18) est recouverte au moins partiellement par une garniture (79) en matériau souple, qui est adaptée pour venir en appui sous le profilé fixe (37) tant que le siège n'est pas occupé par un passager.

## Patentansprüche

1. Fahrzeug-Sitzeinheit (1), mit:
- mindestens einer ersten Gleitschiene (10), die ein ortsfestes Profilteil (37) aufweist, das dazu bestimmt ist, mit dem Boden (11) Fahrzeugs fest verbunden zu werden und das sich in einer sogenannten Längsrichtung erstreckt,
- und einem Sitz (2), der von Füßen (5, 6) getragen wird, von denen mindestens einer lösbar auf die Gleitschiene (10) aufgesetzt ist, um das Trennen des Sitzes von der Schiene zu ermöglichen, wobei dieser Fuß einen Befestigungsriegel (14) aufweist, der von Steuermitteln (61, 76) zwischen einerseits einer verriegelten Stellung, in der der Befestigungsriegel mit der Gleitschiene zusammenwirkt, um den Fuß des Sitzes fest mit der Gleitschiene zu verbinden, und andererseits einer zurückgezogenen Stellung verschoben werden kann, in welcher der Fuß sich von der Gleitschiene lösen kann,
**dadurch gekennzeichnet, dass** der Befestigungsriegel (14) des Fußes ein einziges Backenteil (16) aufweist, das sich ausgehend vom Fuß (5, 6) im wesentlichen senkrecht bis zu einem freien unteren Ende erstreckt, wobei das Backenteil um eine Achse parallel zur Längsrichtung schwenkbar montiert und zwischen der verriegelten und der zurückgezogenen Stellung beweglich ist, wobei das Backenteil an seinem freien Ende einen Befestigungshaken (18) aufweist, der unter einen Bereich des ortsfesten Profilteils (37) eingeführt werden kann, wobei er die Trennung des Fußes (5, 6) vom ortsfesten Profilteil verhindert, wenn der Befestigungsriegel (14) sich in seiner verriegelten Stellung befindet, und der Befestigungshaken (18), wenn der Befestigungsriegel in der zurückgezogenen Stellung ist, weit genug vom ortsfesten Profilteil (37) entfernt ist, um bei der Trennung des entsprechenden Fußes vom ortsfesten Profilteil nicht auf dieses ortsfeste Profilteil einzuwirken, wobei der Sitz außerdem Blockiermittel (59, 88) aufweist, die von einer am Sitz befestigten Gleitschienen-Steuervorrichtung (61) betätigt werden und in der Lage sind, mit dem ortsfesten Profilteil zusammenzuwirken, um jede Längsverschiebung des Sitzes zu verhindern,
und dass der Befestigungsriegel (14) eine sogenannte Gleitstellung aufweist, die zwischen seiner verriegelten und seiner zurückgezogenen Stellung liegt, in der das Backenteil (16) des Befestigungsriegels weit genug vom ortsfesten Profilteil (37) entfernt ist, um ein Längsgleiten des entsprechenden Fußes (5) entlang des ortsfesten Profils zu erlauben, in der der Befestigungshaken (18) des Backenteils aber unter dem ortsfesten Profilteil in Eingriff bleibt.

2. Sitzeinheit nach Anspruch 1, wobei die Blockiermittel einen Gleitschienenriegel (59) aufweisen, der vom Sitz (2) getragen wird, und der zwischen einerseits einer verriegelten Stellung, in der der Gleitschienenriegel mit Riegelaufnahmezonen (47) zusammenwirkt, die entlang des ortsfesten Profilteils (37) angeordnet sind, um die Längsverschiebung des Sitzes zu verhindern, und andererseits einer entriegelten Stellung verschiebbar ist, in der der Gleitschienenriegel nicht in die Riegelaufnahmezonen eingreift.

3. Sitzeinheit nach Anspruch 2, wobei der Gleitschienenriegel (59) und der Befestigungsriegel (14) über Koppelmittel (61) miteinander verbunden sind, die so angepasst sind, dass:
- wenn der Befestigungsriegel (16) und der Gleitschienenriegel (59) beide in ihrer verriegelten Stellung sind, das erste Backenteil (16) gegen das ortsfeste Profilteil angedrückt ist,
- und dasst bei der Betätigung der Gleitschienen-Steuervorrichtung (76, 62, 64) zum Verschieben des Gleitschienenriegels in seine entriegelte Stellung das Backenteil (16) in seine Gleitstellung gebracht wird.

4. Sitzeinheit nach Anspruch 1 oder Anspruch 3, wobei der Gleitschienenriegel (59) und der Befestigungsriegel (14) über Koppelmittel (61) miteinander verbunden sind, die so angepasst sind, das:
- der Gleitschienenriegel (59) entriegelt wird, wenn der Befestigungsriegel (16) in seiner zurückgezogenen Stellung ist,
- und dass der Haken (18) des Befestigungsriegels unter dem ortsfesten Profilteil (37) der Gleitschiene in Eingriff ist, wenn der Gleitschienenriegel (59) in seiner verriegelten Stellung ist.

5. Sitzeinheit nach Anspruch 3 oder Anspruch 4, wobei die Gleitschienen-Steuervorrichtung (61) auch den Befestigungsriegel (14) betätigt und zwischen drei Stellungen verschiebbar ist:
- einer ersten Stellung, in der der Befestigungsriegel (14) und der Gleitschienenriegel (59) beide in ihrer verriegelten Stellung sind, wobei das Backenteil (16) dann gegen das ortsfeste Profilteil (37) der Gleitschiene gedrückt ist,
- einer zweiten Stellung, in der der Gleitschienenriegel (59) in seiner entriegelten Stellung und der Befestigungsriegel (16) in seiner Gleitstellung ist,
- und einer dritten Stellung, in der der Gleitschienenriegel (59) in seiner entriegelten Stellung und der Befestigungsriegel (14) in seiner zurückgezogenen Stellung ist.

6. Sitzeinheit nach einem der Ansprüche 2 bis 5, wobei die Gleitschienen-Steuervorrichtung (61) eine querliegende Steuerwelle (62) aufweist, die in Bezug auf den Sitz schwenkbar angeordnet ist, wobei diese Steuerwelle den Gleitschienenriegel (59) über eine Gleitschienen-Steuernocke (64) betätigt.

7. Sitzeinheit nach einem der Ansprüche 2 bis 6, mit zwei gleichen, parallelen Gleitschienen (10), die je ein ortsfestes Profilteil (37) besitzen, und mit ersten und zweiten Paare von Füßen, die je zwei Füße (5, 6) aufweisen, die von den beiden Gleitschienen getragen werden und einander zugeordnet angeordnet sind, wobei jeder Fuß (5) des ersten Paars einen oben erwähnten Befestigungsriegel (14) und einen oben erwähnten Gleitschienenriegel (59) aufweist, wobei dieser Befestigungsriegel (14) und dieser Gleitschienenriegel (59) der Füße des ersten Paars elastisch in ihre Verriegelungsstellung beaufschlagt werden und gleichzeitig in ihre zurückgezogene bzw. entriegelte Stellung mittels eines ersten Steuerorgans (76) verschiebbar sind, und die Gleitschienenriegel (59) der beiden Füße (5) des ersten Paares mittels eines zweiten Steuerorgans (80) gleichzeitig in ihre entriegelte Stellung verschiebbar sind, ohne dass die Befestigungsriegel (14) in ihre zurückgezogene Stellung verschoben werden.

8. Sitzeinheit nach Anspruch 7, wobei jeder Fuß (6) des zweiten Paares einen Befestigungsriegel (14) aufweist, der elastisch in eine verriegelte Stellung beaufschlagt wird, in der der Befestigungsriegel unter einen Bereich des entsprechenden ortsfesten Profilteils in Eingriff gelangt, wobei die Befestigungsriegel der Füße (6) des zweiten Paares gleichzeitig mittels eines dritten Steuerorgans (76) in eine zurückgezogene Stellung verschoben werden können, die es ermöglicht, die Füße des zweiten Paars von den ortsfesten Profilteilen (37) zu trennen.

9. Sitzeinheit nach Anspruch 1, wobei die Blockiermittel (88) zum Backenteil (16) gehören, das angepasst ist, um mit Riegel-Aufnahmezonen (85) des ortsfeste Profilteils zusammenzuwirken, um den Sitz zu blockieren, wenn das Backenteil (16) in seiner verriegelten Stellung ist.

10. Sitzeinheit nach Anspruch 9, wobei die Gleitschienen-Steuervorrichtung (61) angepasst ist, um das Backenteil anzuheben, indem der Befestigungshaken (18) mit Andrücken unter das ortsfeste Profilteil (37) angelegt wird, wenn das Backenteil in seiner verriegelten Stellung ist.

11. Sitzeinheit nach Anspruch 10, wobei der Befestigungshaken (18) nach oben ausgerichtete Reliefs (88) aufweist, die angepasst sind, um sich, wenn das Backenteil in seiner verriegelten Stellung ist, in komplementäre Reliefs (85) einzufügen, die unter dem entsprechenden Bereich (44) des ortsfesten Profilteils ausgebildet sind.

12. Sitzeinheit nach einem der Ansprüche 10 und 11, wobei die Gleitschienen-Steuervorrichtung (61) zwischen drei Stellungen verschiebbar ist:
- einer ersten Stellung, in der das Backenteil (16) gegen das ortsfeste Profilteil (37) der Gleitschiene (16) gedrückt ist,
- einer zweiten Stellung, in der das Backenteil (16) in einer Gleitstellung ist, in der der Haken (18) dieses Backenteils unter dem entsprechenden Bereich (44) des ortsfesten Profilteils in Eingriff bleibt, in der aber ein gewisser Spielraum zwischen dem Befestigungsorgan und dem ortsfesten Profilteil ausgebildet ist, um eine Längsverschiebung des Sitzes zu ermöglichen,
- und einer dritten Stellung, in der das Backenteil (16) in seiner zurückgezogenen Stellung ist.

13. Sitzeinheit nach einem der Ansprüche 2 bis 12, wobei die Gleitschienen-Steuervorrichtung (61) eine querliegende Steuerwelle (62) aufweist, die in Bezug auf den Sitz zwischen Verriegelungs- und Entriegelungs-Winkelstellungen schwenkbar montiert ist, die der verriegelten bzw. der zurückgezogenen Stellung des Backenteils entsprechen, wobei diese Steuerwelle das Backenteil (16) über eine erste Befestigungs-Steuernocke (71) betätigt, die in Bezug auf die Steuerwelle (62) axial ausgerichtet und angepasst ist, um das Backenteil in seine zurückgezogene Stellung schwenken zu lassen, wenn die Steuerwelle in ihrer Verriegelungs-Winkelstellung ist, wobei das Backenteil (16) außerdem elastisch in seine verriegelte Stellung beaufschlagt wird.

14. Sitzeinheit nach Anspruch 13, wobei das Backenteil (16) mit einem gewissen Spiel schwenkbar am entsprechenden Fuß (5, 6) befestigt ist, wobei die querliegende Steuerwelle (62) außerdem eine zweite Befestigungs-Steuernocke (67) aufweist, die in Bezug auf die Steuerwelle radial angeordnet ist und mit dem Backenteil zusammenwirkt, um:
- dieses Backenteil (16) anzuheben, indem der Befestigungshaken (18) mit Andrücken unter das ortsfeste Profilteil (37) angelegt wird, wenn die Steuerwelle (62) sich in ihrer Verriegelungs-Winkelstellung befindet,
- und das Backenteil (16) abzusenken, indem ein gewisses Spiel zwischen dem Befestigungshaken (18) und dem ortsfesten Profilteil (37) gebildet wird, wenn die Steuerwelle (62) sich in einer Zwischen-Winkelstellung zwischen ihrer Verriegelungs-Winkelstellung und ihrer Entriegelungs-Winkelstellung befindet.

15. Sitzeinheit nach Anspruch 14, wobei der Bereich (44) des ortsfesten Profilteils, unter den der Befestigungshaken (18) des Backenteils in Eingriff gelangt, eine nach unten offene Längsnut (45) aufweist, während der Befestigungshaken eine Nase (58) besitzt, die nach oben vorsteht und in der Lage ist, sich in die Nut einzufügen, wenn die Steuerwelle (62) in ihrer Verriegelungs-Winkelstellung ist.

16. Sitzeinheit nach einem der Ansprüche 2 bis 15, wobei das ortsfeste Profilteil (37) einerseits einen Profilkörper (39) auf der Basis von Aluminium, der dazu bestimmt ist, mit dem Boden (11) des Fahrzeugs fest verbunden zu werden, und andererseits ein gebogenes Stahlblech (46) aufweist, das den Aluminiumkörper teilweise bedeckt und Ausschnitte (47, 85) aufweist, die die Aufnahmezonen für den Riegel bilden.

17. Sitzeinheit nach einem der vorhergehenden Ansprüche, die zwei gleiche parallele Gleitschienen (10) besitzt, die je ein ortsfestes Profilteil (37) aufweisen, wobei mindestens zwei der Füße (5, 6) des Sitzes an den beiden ortsfesten Profilteilen je mit Hilfe von zwei Backenteilen (16) lösbar befestigt sind, die Befestigungshaken (18) aufweisen, welche sich in zueinander entgegengesetzten Richtungen erstrecken.

18. Sitzeinheit nach einem der vorhergehenden Ansprüche, wobei das ortsfeste Profilteil (37) im wesentlichen einen Querschnitt in Form eines nach oben offenen U aufweist, mit einer im wesentlichen waagrechten Basis (40) und zwei im wesentlichen senkrechten Flügeln (42, 43), von denen einer (43) eine im wesentlichen waagrechte Randleiste (44) aufweist, die zum anderen Flügel (42) hin vorsteht, wobei das Backenteil (16) angepasst ist, um zwischen die beiden Flügel des ortsfesten Profilteils einzudringen, so dass der Befestigungshaken (18) unter die waagrechte Randleiste (44) des ortsfesten Profils eingreifen kann.

19. Sitzeinheit nach Anspruch 18, wobei der das Backenteil (16) aufweisende Fuß (5, 6) ein nach unten vorstehendes Führungsorgan (49) aufweist, das angepasst ist, um sich mit einem geringen Spiel zwischen die Flügel (42, 43) des ortsfesten Profilteils einzufügen.

20. Sitzeinheit nach einem der vorhergehenden Ansprüche, wobei der das Backenteil (16) aufweisende Fuß (5, 6) am Sitz gemäß einer waagrechten Querachse (7, 8), mit einem geringen Winkelspiel gemäß einer waagrechten Längsachse parallel zum ortsfesten Profilteil, schwenkbar angeordnet ist.

21. Sitzeinheit nach einem der vorhergehenden Ansprüche, wobei der das Backenteil (16) aufweisende Fuß (5, 6) über einen elastischen Gleitschuh (52) auf dem ortsfesten Profilteil (37) ruht, der angepasst ist, um den Befestigungshaken (18) unter dem ortsfesten Profilteil (37) in Anlage zu halten, solange der Sitz nicht von einem Fahrgast besetzt ist, und um sich zusammenzudrücken, wenn der Sitz von einem Fahrgast besetzt ist, indem dann ein bestimmtes senkrechtes Spiel zwischen dem Befestigungshaken und dem ortsfesten Profilteil gebildet wird.

22. Sitzeinheit nach Anspruch 21, wobei der Befestigungshaken (18) zumindest teilweise mit einem Belag (79) aus elastischem Material bedeckt ist, der angepasst ist, um unter dem ortsfesten Profilteil (37) in Anlage zu kommen, solange der Sitz nicht von einem Fahrgast besetzt ist.

## Claims

1. A vehicle seat assembly (1), comprising :
- at least one first guide rail (10) including a fixed section (37) which is intended to be integral with the vehicle floor (11) and which extends in a so-called longitudinal direction,
- and a seat (2) which is supported by its feet (5, 6) at least one of which is assembled in a removable manner on the guide rail (10) to enable the seat to be detached from the guide rail, this foot comprising a coupling lock (14) which is movable by control means (61, 76) between, on the one hand, a locked position where the aforesaid coupling lock engages with the guide rail to make the seat foot integral with the aforesaid guide rail, and, on the other hand, a withdrawn position where the foot can separate from the guide rail,
**characterised in that** the coupling lock (14) of said foot includes a single jaw part (16) which extends approximately vertically from the foot (5, 6) to a lower free end, the jaw part being pivoted about an axis parallel to the longitudinal direction and being movable between said locked and withdrawn positions, the aforesaid jaw part comprising at its free end a coupling claw (18) which is capable of engaging under a part of the fixed section (37) preventing the separation of the foot (5, 6) and the fixed section when the coupling lock (14) is in its locked position, and the aforesaid coupling claw (18) being sufficiently separated from the fixed section (37) when the coupling lock is in the withdrawn position, in order then to not interfere with this fixed section during separation of the corresponding foot and the aforesaid fixed section, the seat comprising moreover locking means (59,88) which are activated by a guide rail control device (61) carried by the seat and which are capable of engaging with the fixed section in order to prevent any longitudinal movement of the seat,
and **in that** the coupling lock (14) has a so-called sliding position, halfway between its locked position and its withdrawn position, where the jaw part (16) of the coupling lock is sufficiently separated from the fixed section (37) to enable a longitudinal sliding of the corresponding foot (5) along the aforesaid fixed section, but where at least the coupling claw (18) of said jaw part remains engaged under the fixed section.

2. A seat assembly according to claim 1, in which the locking means include a guide rail lock (59) which is carried by the seat (2) and which is movable between, on the one hand, a locked position where the aforesaid guide rail lock engages with lock reception zones (47) arranged along the fixed section (37) to prevent the longitudinal movement of the seat, and on the other hand, an unlocked position where the aforesaid guide rail lock does not interfere with the aforesaid lock reception zones.

3. A seat assembly according to claim 2, in which the guide rail (59) and coupling (14) locks are connected together by coupling means (16) adapted :
- so that, when the coupling lock (14) and the guide rail lock (59) are both in their locked position, the first jaw part (16) is clamped against the fixed section,
- and so that, during the activation of the guide rail control device (76, 62, 64) in order to move the guide rail lock into its unlocked position, the jaw part (16) is placed in its sliding position.

4. A seat assembly according to claim 2 or claim 3, in which the guide rail (59) and coupling (14) locks are connected together by coupling means (61) adapted :
- so that the guide rail lock (59) is unlocked when the coupling lock (16) is in its withdrawn position,
- and so that the claw (18) of the coupling lock is engaged under the fixed section (37) of the guide rail when the guide rail lock (59) is in its locked position.

5. A seat assembly according to claim 3 or claim 4, in which the guide rail control device (61) also activates the coupling lock (14), and is movable between three positions:
- a first position where the coupling lock (14) and the guide rail lock (59) are both in their locked position, the jaw part (16) then being clamped against the fixed section (37) of the guide rail,
- a second position where the guide rail lock (59) is in its unlocked position and the coupling lock (16) is in its sliding position,
- and a third position where the guide rail lock (59) is in its unlocked position and the coupling lock (14) is in its withdrawn position.

6. A seat assembly according to any one of the claims 2 to 5, in which the guide rail control device (61) includes a transverse control shaft (62) which is pivoted relative to the seat, this control shaft activating the guide rail lock (59) by means of a guide rail control cam (64).

7. A seat assembly according to any one of the claims 2 to 6, comprising two similar parallel guide rails (10) each having a fixed section (37), and first and second pairs of feet which each include two feet (5, 6) carried by the two guide rails and arrange to mutually connect, each foot (5) of the first pair including an aforementioned coupling lock (14) and an aforementioned guide rail lock (59), these coupling (14) and guide rail (59) locks of the feet of the first pair being resiliently assisted to their locked position and being simultaneously movable into their respectively withdrawn and locked positions by means of a first control part (76), and the aforesaid guide rail locks (59) of the two feet (5) of the first pair being simultaneously movable into their unlocked position by means of a second control part (80), without movement of the coupling locks (14) into their withdrawn position.

8. A seat assembly according to claim 7, in which each foot (6) of the second pair includes coupling lock (14) which is resiliently assisted to a locked position where said coupling lock is engaged under a portion of the corresponding fixed section, the coupling lock of the feet (6) of the second pair being simultaneously movable, by means of a third control part (76), into a withdrawn position enabling to separate the feet of the second pair from the fixed sections (37).

9. A seat assembly according to claim 1, in which the locking means (88) belong to the jaw part (16) which is adapted to engage with lock reception zones (85) of the fixed section to lock the seat when the aforesaid jaw part (16) is in its locked position.

10. A seat assembly according to claim 9, in which the guide rail control device (61) is adapted to raise the jaw part by applying the coupling claw (18) under the fixed section (37), with clamping, when the aforesaid jaw part is in its locked position.

11. A seat assembly according to claim 10, in which the coupling claw (18) has upwards directed reliefs (88) which are adapted to engage, when the jaw part is in its locked position, in the complementary reliefs arranged under the corresponding part (44) of the fixed section.

12. A seat assembly according to any one of the claims 10 and 11, in which the guide rail control device (61) is movable between three positions :
- a first position where the jaw part (16) is clamped against the fixed section (37) of the guide rail,
- a second position where the jaw part (16) is in a sliding position where the claw (18) of this jaw part remains engaged under the corresponding part (44) of the fixed section, but where some clearance is arranged between the aforesaid coupling part and the fixed section to enable a longitudinal movement of the seat,
- and a third position where the jaw part (16) is in its withdrawn position.

13. A seat assembly according to any one of the claims 2 to 12, in which the guide rail control device (61) includes a transverse control shaft (62) which is pivoted relative to the seat between angular locking and unlocking positions corresponding respectively to the locked and withdrawn positions of the jaw part, this control shaft activating the jaw part (16) by means of a first coupling control cam (71) which is axially positioned relative to the control shaft (62) and which is adapted to pivot the aforesaid jaw part to its withdrawn position when the control shaft is in its angular locking position, the jaw part (16) being moreover resiliently assisted to its locked position.

14. A seat assembly according to claim 13, in which the jaw part (16) is pivoted with some vertical clearance on the corresponding foot (5, 6), the transverse control shaft (62) comprising besides a second coupling control cam (67) which is radially positioned relative the aforesaid control shaft and which engages with the jaw part in order to :
- raise this jaw part (16) by applying the coupling claw (18) under the fixed section (37), with clamping, when the control shaft (62) is in its angular locking position.
- and lower the aforesaid jaw part (16) by arranging some clearance between the coupling claw (18) and the fixed section (37) when the control shaft (62) is in an angular position halfway between its angular locking and unlocking positions.

15. A seat assembly according to claim 14, in which the part (44) of the fixed section, under which the coupling claw (18) of the jaw part engages, has a longitudinal groove open downwards whereas the aforesaid coupling claw has a nose (58) which projects upwards and which is adapted to engage in the aforesaid groove when the control shaft (62) is in its angular locking position.

16. A seat assembly according to any one of the claims 2 to 15, in which the fixed section (37) comprises on the one hand, a shaped body (39) with aluminium base which is intended to be integral with the vehicle floor (11), and on the other hand, a folded steel sheet (46) which partially covers the aluminium body and which comprises notches (47, 85) forming the aforesaid lock reception zones.

17. A seat assembly according to anyone pf the preceding claims, comprising two similar parallel guide rails (10) each having a fixed section (37), at least two of the seat feet (5, 6) being assembled in a removable manner on the two fixed sections, respectively by means of two jaw parts (16) having respectively coupling claws (18) which extend in mutually opposite directions.

18. A seat assembly according to anyone of its preceding claims, in which the fixed section (37) has an approximately opening upwards U section, with an approximately horizontal base (40) and two approximately vertical webs (42, 43), one (43) of the webs comprising an approximately horizontal edge (44) projecting towards the other web (42), the jaw part (16) being adapted to penetrate between the webs of the fixed section so that the coupling claw (18) can engage under the horizontal edge (44) of the aforesaid fixed section.

19. A seat assembly according to claim 18, in which the foot (5, 6) comprising the jaw part (16) has a guide part (49) projecting downwards, which is adapted to engage between the webs (42, 43) of the fixed section with little clearance.

20. A seat assembly according to any one of the previous claims, in which the foot (5, 6) comprising the jaw part (16) is pivoted on the seat along a transverse horizontal rotational axis (7, 8), with a small angular clearance along a longitudinal horizontal axis parallel to the fixed section.

21. A seat assembly according to any one of the previous claims, in which the foot (5, 6) comprising the jaw part (16) rests on the fixed section (37) by means of a flexible sliding pad (52) which is adapted to hold the coupling claw (18) supported under the fixed section (37) whilst the seat is not occupied by a passenger, and to be compressed when the seat is occupied by a passenger, by arranging then some vertical clearance between the coupling claw and the fixed section.

22. A seat assembly according to claim 21, in which the coupling claw (18) is covered at least partially by a lining (79) of flexible material, which is adapted to be supported under the fixed section (37) whilst the seat is not occupied by a passenger.
